# EUROPEAN PATENT APPLICATION

(11) **EP 3 933 591 A1**
(43) Date of publication of application: **05.01.2022**
(21) Application number: 21161178.5
(22) Date of filing: 08.03.2021
(51) Int. Cl.: G06F 9/54

(54) **STREAM COMPUTING METHOD AND APPARATUS BASED ON DAG INTERACTION**

(30) Priority: 30.06.2020 CN 202010622403
(71) Applicant: BEIJING BAIDU NETCOM SCIENCE AND TECHNOLOGY CO. LTD., 100085 Beijing (CN)
(72) Inventor: CHEN, Weixu, BEIJING, Beijing 100085 (CN); YE, Qing, BEIJING, Beijing 100085 (CN)
(74) Representative: Laqua, Bernd Christian Kurt

(57) **Abstract**

A stream computing method and apparatus based on DAG interaction is provided. A stream computing method based on directed acyclic graph (DAG) interaction includes the following steps: generating first DAG job stream description information according to a first DAG node graph composed of DAG nodes belonging to a first type set; converting the first DAG job stream description information into second DAG job stream description information by adapting the DAG nodes belonging to the first type set into DAG nodes belonging to a second type set suitable for a Flink engine; encapsulating the second DAG job stream description information into a DAG execution package, the DAG execution package comprising the second DAG job stream description information and an arithmetic logic of nodes in the second DAG job stream description information; and sending the DAG execution package to a job running cluster.

## Description

### Technical Field

The present disclosure relates to data processing and cloud computing, and in particular to a stream computing method and apparatus based on DAG interaction.

### Background

Stream computing is a computing mode different from batch computing. It can well analyze large-scale continuous data in real time during an ever-changing movement process, extract useful information, and quickly transfer a computation result to a downstream node. After a user configures a batch interval, a checkpoint and other information, and composes a DAG of job stream execution by dragging, the DAG graph is processed by using the ideal of microbatches of SparkStreaming, to be transformed into an executable program logic, which is then submitted to a computing cluster for execution. In addition, in a current real-time job stream computing solution, nodes in the DAG are managed in a distributed manner, which means that each node has its own encapsulation logic, and is distinguished by field information described for the node.

However, as the amount of data increases and the demand for computational accuracy and real-time increases with each passing day, such a configuration has gradually caused problems. On one hand, as SparkStreaming regards a stream as a special case of a batch, and due to its underlying logic relying on time intervals, SparkStreaming is actually a near-real-time computing framework. Although it can implement part of the stream computing service, however, for some computing scenarios with a large data volume and high requirements on real-time and accuracy, such as an event level scenario and a stateful computing scenario, the computational accuracy and performance of SparkStreaming decline, and for scenarios where computing is distributed on multiple machines and there is a delay in data transmission, SparkStreaming running scenarios cannot meet customers' needs. On the other hand, the program of each node in the DAG is encapsulated in a different computational logic. Therefore, in a complex service logic, a job stream and the initialization of its nodes and related class loading will inevitably cause great network and time overhead, which affects system performance.

### Summary

According to one aspect of the present disclosure, a stream computing method based on directed acyclic graph (DAG) interaction is provided, including the following steps: generating first DAG job stream description information according to a first DAG node graph composed of DAG nodes belonging to a first type set; converting the first DAG job stream description information into second DAG job stream description information by adapting the DAG nodes belonging to the first type set into DAG nodes belonging to a second type set suitable for a Flink engine; encapsulating the second DAG job stream description information into a DAG execution package, the DAG execution package including the second DAG job stream description information and an arithmetic logic of nodes in the second DAG job stream description information; and sending the DAG execution package to a job running cluster.

According to another aspect of the present disclosure, a stream computing apparatus based on directed acyclic graph (DAG) interaction is provided, including: a job generation unit, configured to generate first DAG job stream description information according to a first DAG node graph composed of DAG nodes belonging to a first type set; a job processing unit, configured to convert the first DAG job stream description information into second DAG job stream description information by adapting the DAG nodes belonging to the first type set into DAG nodes belonging to a second type set suitable for a Flink engine; and a j ob submission unit, configured to encapsulate the second DAG job stream description information into a DAG execution package and send the DAG execution package to a job running cluster, wherein the DAG execution package includes the second DAG job stream description information and an arithmetic logic of nodes in the second DAG job stream description information.

According to yet another aspect of the present disclosure, an electronic device is also provided, including: a processor; and a memory storing a program, the program including instructions that, when executed by the processor, cause the processor to execute the above stream computing method based on directed acyclic graph (DAG) interaction.

According to still another aspect of the present disclosure, a computer-readable storage medium storing a program is also provided, the program including instructions that, when executed by a processor of an electronic device, cause the electronic device to execute the above stream computing method.

According to still another aspect of the present disclosure, a computer program product comprising program code portions is provided, program code portions being used for performing the above stream computing method when the computer program product is executed on one or more computing devices.

According to an aspect of the present disclosure, the stream computing method based on directed acyclic graph (DAG) interaction can improve the processing efficiency of stream computing.

### Brief Description of the Drawings

The drawings exemplarily illustrate embodiments and constitute a part of the specification, and together with text description of the specification, serve to explain exemplary implementations of the embodiments. The illustrated embodiments are for illustrative purposes only and do not limit the scope of the claims. In all drawings, same reference signs denote similar but not necessarily same elements:
Fig. 1 is a flow diagram of an exemplary method for stream computing based on DAG interaction according to embodiments of the present disclosure;
Fig. 2 is an exemplary system architecture for stream computing based on DAG interaction according to embodiments of the present disclosure;
Figs. 3A-3C are exemplary service data flow diagrams according to embodiments of the present disclosure;
Fig. 4 is an exemplary underlying metadata flow diagram according to embodiments of the present disclosure;
Fig. 5 is a schematic diagram of exemplary job submission stage running and data flow according to embodiments of the present disclosure;
Fig. 6 is a flow diagram of an exemplary remote job submission method according to embodiments of the present disclosure;
Fig. 7 is a flow diagram of an exemplary local job submission method according to embodiments of the present disclosure;
Fig. 8 is a block diagram of an apparatus for stream computing based on DAG interaction according to embodiments of the present disclosure; and
Fig. 9 is a schematic diagram of an exemplary computing device for stream computing based on DAG interaction according to embodiments of the present disclosure.

### Detailed Description of the Embodiments

Exemplary embodiments of the present disclosure are described hereinafter in conjunction with the accompanying drawings, in which various details of the embodiments of the present disclosure are included to facilitate understanding, and should be regarded as merely exemplary. Therefore, those of ordinary skill in the art should appreciate that various changes and modifications can be made to the embodiments described herein without departing from the scope and spirit of the present disclosure. Likewise, for clarity and conciseness, description of well-known functions and structures is omitted in the following description.

In the present disclosure, unless otherwise specified, the use of the terms "first", "second" and the like to describe various elements is not intended to define the positional relationship, timing relationship, or importance relationship of these elements. Such terms are only used for distinguishing one element from another. In some examples, a first element and a second element may refer to a same instance of the respective elements, and in some cases, may also refer to different instances based on description of the context. Unless the context clearly indicates otherwise, if the number of elements is not specifically defined, there may be one or more such elements. In addition, the term "and/or" used in the present disclosure covers any one of listed items and all possible combinations.

The present disclosure is directed to a front-end visual programming platform for enterprises in a public cloud scenario, which can achieve a user-side zero-code solution and implement real-time stream processing of a large amount of data, reduce distributed influence, and improve computational accuracy. Specifically, the present disclosure is directed to a stream computing solution based on directed acyclic graph (DAG) visual interaction.

At present, main processing frameworks of stream computing are as follows:
(1) Storm: a distributed real-time big data processing framework open sourced by Twitter. It involves stream processing in real sense, and has low-latency and high-throughput computing characteristics, but no state management function. Since each piece of data triggers computation, its computing performance is limited.
(2) SparkStreaming: Spark is a Hadoop MapReduce-like general parallel framework open sourced by UC Berkeley AMP lab. It uses resilient distributed datasets (RDDs) as a fundamental data structure. SparkStreaming is a stream computing framework based on SparkRDD. It uses the idea of micro batches to split an unbounded data stream into bounded data in the time dimension by batch intervals, for transformation into computations of underlying RDDs, and has high-performance and high-throughput computing characteristics. However, as a computational model of SparkStreaming still relies on an offline computing framework, its real-time performance is not high in some scenarios.
(3) Flink: Flink is currently a popular distributed engine for stream computing, and can perform stateful computations over unbounded and bounded data streams. In the technical concept of Flink, data is naturally considered as an unbounded stream, but bounded stream computations can be performed by adding windows. Flink not only has some computing characteristics of Spark and Storm, but also supports event time to control window time, supports data fault-tolerant processing under out-of-order time, guarantees the exactly-once semantics in computations, and has high-performance, high-throughput and low-latency characteristics.

Although the computing framework of Flink is very popular, however, in the developing process by means of a Flink API, problem abstraction needs to be carried out, and a computational logic of each step needs to be transformed into a computational logic of an underlying operator of Flink by means of an API, so the requirement on developers is high, and the code logic is very complicated, which can reduce development efficiency to some extent.

Specifically, in terms of stream computing, Flink regards batch computing as a special case of stream computing, and has a fault tolerance and fault correction mechanism for delays in it, and thus is more suitable for real-time computing scenarios with a large data volume and complex scene distribution.

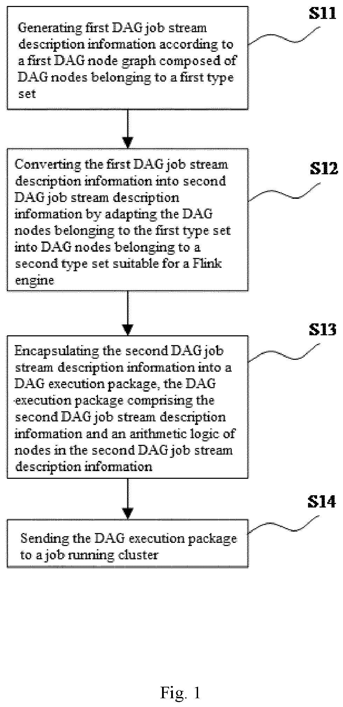

An exemplary method of the present disclosure will be described below in conjunction with Fig. 1.

In step S11, DAG job stream description information is generated according to a DAG node graph. For convenience and distinction, the DAG node graph here may be referred to as a first DAG node graph, and the DAG job stream description information generated for the first DAG node graph is referred to as first DAG job stream description information. For the convenience of description, the term "first type set" is used to include types to which nodes in the first DAG node graph can belong.

Next, in step S12, the first DAG job stream description information is converted into second DAG job stream description information by adapting the DAG nodes belonging to the first type set into DAG nodes belonging to a second type set suitable for a Flink engine. The second DAG job stream description information is DAG information suitable for execution by Flink, and therefore the DAG nodes belonging to the second type set are node types suitable for Flink.

In step S13, the second DAG job stream description information is encapsulated into a DAG execution package, the DAG execution package including the second DAG job stream description information and an arithmetic logic of nodes in the second DAG job stream description information. Specifically, the second job stream information suitable for Flink generated in step S12 can be further processed to generate a program package for submission and running. The process of generating a program package for submission and running can be implemented by encapsulating the second DAG job stream description information into a DAG execution package.

In S14, the program package is submitted to a job running cluster. Stream computing can be executed in the job running cluster.

By using the above method steps, the processing efficiency of stream computing can be effectively improved.

Some variations of the exemplary method according to the present disclosure will be described below.

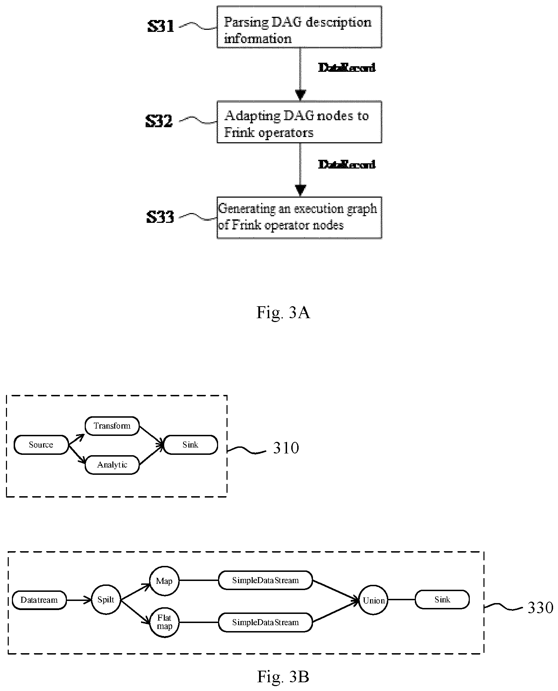

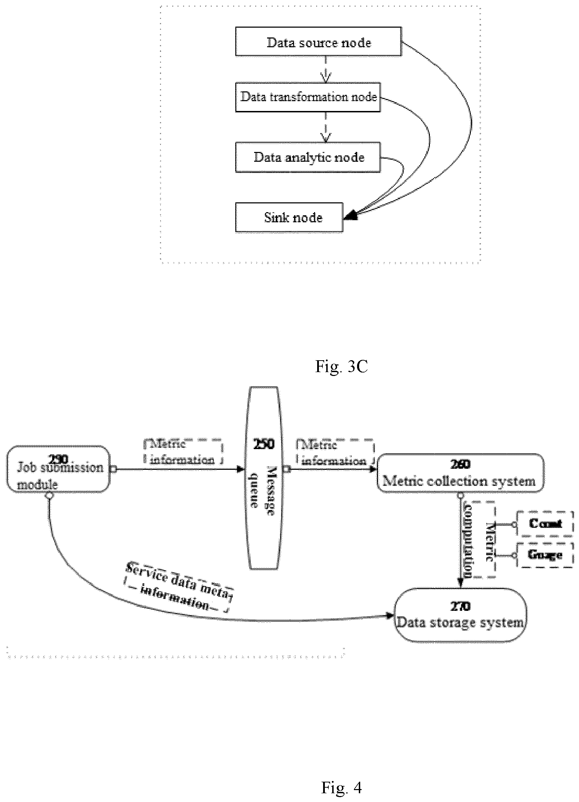

The DAG nodes belonging to the first type set at least include a data source type (Source), a data transformation type (Transform), a data analytic type (Analytic), and a sink type (Sink). According to some embodiments, the DAG nodes belonging to the first type set at least include the data source type, the data transformation type, a data join type (Join) of nodes, a data aggregation type (Aggregator), and the sink type, wherein the data join node and the data aggregation node are two different types of data analytic nodes. The DAG nodes of the first type set will be described below in more detail with reference to Fig. 3.

The first DAG node graph may be formed by inputting the DAG nodes by a user. Specifically, according to some embodiments, the first DAG node graph is formed by dragging the DAG nodes belonging to the first type set by a user. In this way, convenient and efficient visual programming is achieved. In such an implementation, the user drags different types of DAG nodes to form a user-specific directed acyclic graph to achieve the required service logic. Optionally, in addition to receiving the DAG node graph, configuration information input by the user is also received.

The job stream description information describes the DAG nodes. The first DAG job stream description information includes a job stream ID, a job stream name, and detailed information of each plug-in in the job stream. As to the converted job stream description information or the second DAG job stream description information that will be described below, it also includes configuration for Flink stream computing. In a job stream description file, classification is made according to the types of the DAG nodes. Different types of nodes have their respective description information. According to some embodiments, the first DAG description information may be in a json (JavaScript Object Notation) format, and the second DAG job stream description information may also be in a json format. Json is a lightweight data exchange format, has the advantage of a visual, concise and clear hierarchical structure, and is easy to read and write, and also easy for machine parsing and generation.

According to some embodiments, the first DAG job stream description information and the second DAG job stream description information adopt the same data encapsulation to achieve that under a complex service logic, the front-end and back-end service logic can share data information, and the completeness and reliability of the DAG description information is guaranteed. According to an implementation, data can be encapsulated into a data structure of DataRecord in a unified manner, thereby unifying the data information in the job stream. DataRecord may include a type of data, a format of the data, and detailed information of each field in the data. Description information of the data can be serialized in the form of DataRecord and written into description information of the entire DAG.

The first DAG description information can be transferred by a message queue, and the first DAG description information is loaded by subscription from the message queue. For example, after configuration information is loaded and the data information in the form of DataRecord is deserialized to obtain meta-information of the data, data transformation is accomplished. Optionally, in addition to the job stream data, underlying metadata describing the job stream data may also be loaded and parsed. Optionally, sending the second DAG job stream description information to a job submission module may include sending DAG information suitable for Flink execution to the job submission module through a message queue.

The generated DAG execution package may include the second DAG job stream description information for different types of nodes and the arithmetic logic of the nodes. In some embodiments, only one DAG execution package is generated for all different node types in the second DAG job stream description information. This greatly reduces the amount of submitted service and helps the implementation of a remote submission mode.

The above step S14 of submission to a job running cluster may include submission to a job running cluster remotely positioned relative to the submission module, or may include submission to a job running cluster locally positioned relative to the submission module. The job running cluster can be yarn. In this case, twill may be used for management and resource allocation on the submission of the program package. Specifically, a twill module may be used to implement the step of encapsulating the second DAG job stream description information into a DAG execution package and/or sending the DAG execution package to a job running cluster.

In the present disclosure, as described above, the stream computing method based on DAG interaction is designed and implemented based on a Flink computing engine. The overall design generally includes two parts: a process of generating, parsing and adapting a job stream execution graph, and a job scheduling management and running process. Steps S11-S12 correspond to the generating, parsing and adapting process of the job stream execution graph, and the job stream execution DAG graph generated by the user is transferred to the back end. The back end parses the generated DAG graph of job stream running, and determines the operator type in Flink by using the type of each node in the DAG, thereby converting the DAG of job stream running into a DAG to be executed by Flink. Steps S13-S14 correspond to the job scheduling execution process after the job stream execution graph is generated. In addition, in some embodiments, the job scheduling execution process also includes recording and storing the underlying metadata, which will be described in detail below in conjunction with Fig. 4. According to some embodiments, recording and storing the underlying metadata includes collecting metric information of DAG job stream running, performing metric computation by using counter and gauge, and storing computed metric information. This achieves unified management of the running metric information. The metric information can be stored based on the job stream name or the job stream ID. According to some embodiments, recording and storing the underlying metadata further includes the step of receiving and storing flow data meta-information of DAG job stream running from the job running cluster, thereby achieving unified management of the flow data meta-information.

It is to be noted that in the description of the steps here, the message queue is added to reduce the degree of coupling of different modules, but the present disclosure is not limited thereto, and the idea of the present disclosure is also applicable to other common message and data transfer methods that do not rely on a message queue.

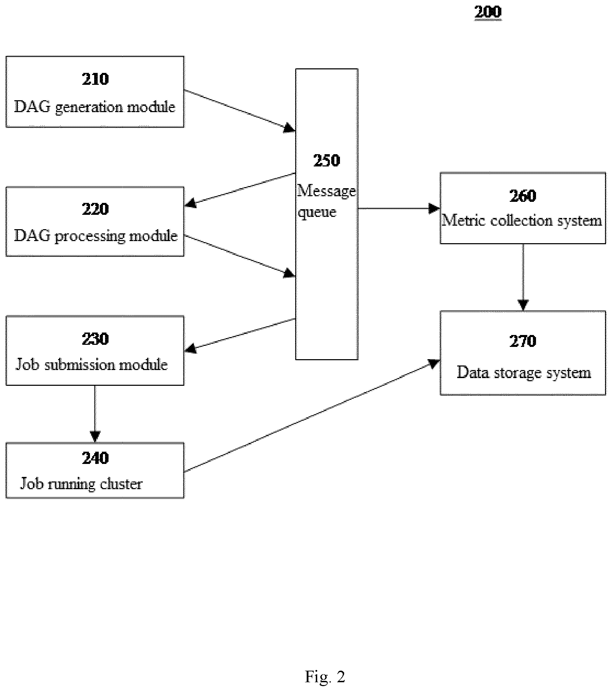

Fig. 2 shows an exemplary system architecture 200 of the present disclosure.

As shown in Fig. 2, the exemplary system architecture includes: a DAG generation module 210 for executing the method described in step S11; a DAG processing module 220 for executing the method described in step S12; a job submission module 230 for executing the method described in steps S13 and S14; a job running cluster 240 for job running; a message queue 250 for decoupling the DAG generation module 210, the DAG processing module 220, and the job submission module 230; a metric collection system 260 for optionally computing a metric in running; and a data storage system 270 for persisting running data.

The division and naming of the modules are only exemplary. For example, the DAG processing module 220 may also be called a DAG loading, parsing and processing module according to its functions. The job submission module 230 may be called a program submission module or a service submission module. The job submission module 230 and the job running cluster 240 may be united into a job submission running module, or called a program submission running module. The job running cluster 240 may be called a program running cluster, a service running cluster, or the like. The job submission module 230 may be local, and the job running cluster 240 may be remote. Alternatively, the job submission module 230 and the job running cluster 240 may be co-positioned. The metric collection system 260 may be called a metric system or a metric processing system. As understood by those skilled in the art, the division of modules here is only for description convenience and functional representations, rather than architectural limitations.

At step S12 described above, the DAG generation module 210 may publish the first DAG description information to a message queue 250. In such an embodiment, the DAG processing module 220 loads the generated first DAG description information by subscribing a topic from the message queue 250.

At step S13 described above, the job submission module 230 may obtain the generated job stream information suitable for Flink by, for example, subscription from the message queue. The job submission module 230 may include a module for unified management of resources. Specifically, in the case where the job running cluster 240 is yarn, the resource management module may be a project Apache Twill for simplifying application development on Yarn, which is referred to as twill below. The job submission module 230 packages the program, and then submits the packaged job to twill. Twill conducts unified management on job packages. For example, after receiving the packaged program, the execution module of twill decompresses the program package, configures the environment in which the program runs by using configuration information, and then submits the service job to the cluster 240 by Flink run.

In addition, as will be described in detail below with reference to Fig. 4, for the underlying metadata, the DAG processing module may also optionally submit metric information to the metric collection system 260 via the message queue 250. The metric collection system 260 computes the metric information, and persists the computed metric in the data storage system 270. The job submission module 230 also submits job stream data meta-information to the data storage system 270. In addition, after the job runs, running log information is also persisted in the data storage system 270.

Next, with reference to Figs. 3A-3C, the job stream data flow of the DAG in Flink is described, and the process of traversing the DAG to perform adaption and package design of DAG nodes and Flink operators is specifically explained.

Fig. 3A is a flow diagram of an adaptation process of the DAG description information. First, in S31, the generated DAG node description information from the user side is parsed. This step can be performed by the DAG processing module 220. According to an embodiment, the DAG from the user side includes four common node types: a data source type (Source), a data transformation type (Transform), a data analytic type (Analytic), and a sink type (Sink). Referring to Fig. 3B, a block 310 is an example of a DAG node graph from the user side.

At S32, different DAG nodes of DAG nodes belonging to the first type set are adapted into corresponding Flink operators.

According to some embodiments, the DAG nodes belonging to the first type set at least include a data source node, a data transformation node, a data join node, a data aggregation node, and a sink node, and adapting the DAG nodes belonging to the first type set into the DAG nodes belonging to the second type set suitable for the Flink engine includes respectively adapting different types of nodes in the DAG nodes belonging to the first type set into corresponding Flink operators with a same data structure. Such a DAG node type set covers a user-friendly and complete programming logic.

In the present disclosure, the adaptation of the above-mentioned node types to Flink operators is designed. Fig. 3C shows a flow diagram of different DAG node types according to this embodiment, in which the data join node and the data aggregation node are collectively referred to as data analytic nodes.

According to some embodiments, adapting the data source node in the DAG nodes belonging to the first type set into a corresponding Flink operator includes, for the data source node: loading configuration information and description information of the data source node; initializing a data source node object; and assigning a Flink stream object. In this way, the initial nodes in the DAG graph are transformed and adapted.

The configuration information of the node can be obtained from the user's input. In the DAG execution graph, the number of data source nodes determines the number of initialized stream objects in stream computing.

According to some embodiments, adapting the data transformation node in the DAG nodes belonging to the first type set into a corresponding Flink operator includes: loading configuration information and description information of the data transformation node; initializing a data transformation node object; encapsulate a data transformation logic in the data transformation node object into a corresponding Flink operator; performing data transformation on the corresponding Flink operator according to a code logic of the data transformation node; and transferring the Flink operator subjected to data transformation to a downstream node. In this way, an adaptation logic of the data transformation node is achieved. The configuration information of the node can be obtained from the user's input.

The data join node and the data aggregation node are two different types of data analytic nodes. According to some embodiments, adapting the data join node in the DAG nodes belonging to the first type set into a corresponding Flink operator includes: loading configuration information and description information of the data join node; initializing a data join node object; finding a join key for a join operation on a data stream related to the data join node; and merging data in the data stream according to the join key. In this way, a data joining logic that is convenient for Flink to execute is achieved. The configuration information of the node can be obtained from the user's input.

According to some embodiments, adapting the data aggregation node in the DAG nodes belonging to the first type set into a corresponding Flink operator includes: loading configuration information and description information of the data aggregation node; initializing a data aggregation node object; finding an aggregation key for an aggregation operation on a data stream related to the data aggregation node; and aggregating data in the data stream according to the aggregation key. In this way, a data aggregation logic that is convenient for Flink to execute is achieved.

Finding the aggregation key for the aggregation operation on the stream information occurs before the data stream is aggregated. Aggregating the data in the data stream occurs after the data stream is aggregated. In the process of adapting the data aggregation node to the Flink operator, it also needs to consider windowing. A rolling window can be used to perform windowing. Alternatively, the windowing is loaded by means of configuration. The configuration information of the node can be obtained from the user's input.

The sink node is a special node type. The sink node is not only a terminal of the job stream data flow, but also a writing point of metadata. According to some embodiments, adapting the sink node in the DAG nodes belonging to the first type set into a corresponding Flink operator includes: loading configuration information and description information of the sink node; initializing a sink node object; encapsulating the sink node object into a runnable object and putting the runnable object into a thread pool; after the DAG nodes are traversed, triggering the sink node object in the thread pool; and writing data into the sink node object. In this way, the terminal of the job stream data is designed, and the execution service data of Flink is more complete. The configuration information of the node can be obtained from the user's input.

In step S33, after the above-mentioned adaptation process, a DAG execution graph of the Flink operators is generated. Referring to Fig. 3B, a block 330 is an example of the DAG execution graph adapted to the Flink operators, obtained by transformation. For convenience and distinction, the DAG execution graph adapted to the Flink operators herein is also referred to as a second DAG node graph. The second DAG node graph is composed of common DAG node types suitable for the Flink engine. For convenience and distinction, a set of DAG node types suitable for the Flink engine may be referred to as a second node type set. According to some embodiments, the second node type set may include a data stream (DataStream) node, a split node, a data map node, a flat map node, a simple data stream (SimpleDataStream) node, a union node, a data sink node, etc., but the present disclosure is not limited thereto. The second node type set may include various node types suitable for execution by the Flink engine.

In addition to the adaptation process from different DAG nodes to Flink operators, the present disclosure also designs the flow and storage of the underlying metadata. The underlying metadata flow of the DAG in Flink will be described in detail with reference to Fig. 4.

The underlying metadata contains the metric information and data metadata of the entire job stream. The underlying metadata is stored in the form of key-value (kv for short). After the job stream completes computations on Flink, the metric information and data meta-information will be written.

The job submission module 230 publishes the metric information of the job stream running after a serialization process to the message queue 250. The metric information includes statistical information such as an input and output data volume of each node, job execution time, and error messages of the job stream.

After subscribing messages, the metric collection system 260 parses the content of the messages, and determines a metric computation method according to different data information. Two computation methods are provided in the present disclosure, namely Counter and Gauge. Counter refers to monotonically increasing metric summation. As an example, it can be used to indicate the number of service requests, the number of completed tasks, the number of error occurrences, etc. Gauge is a discrete metric measure for metrics in which sample data can change arbitrarily, such as temperature or memory usage, or the number of current concurrent requests.

After completing computations of various metrics, the metric collection system 260 generates a key of the current metric based on a job stream name or job stream ID, a metric name, and time stamp information, and stores the metric in the above-mentioned kv form in the data storage system 270.

As to the flow data meta-information of the job stream, after running of a job stream program submitted to the job stream running cluster is completed, the flow data meta-information of the job stream will be directly stored in the storage system 270, wherein a data name, a data ID and a time stamp constitute a key value of the stored information.

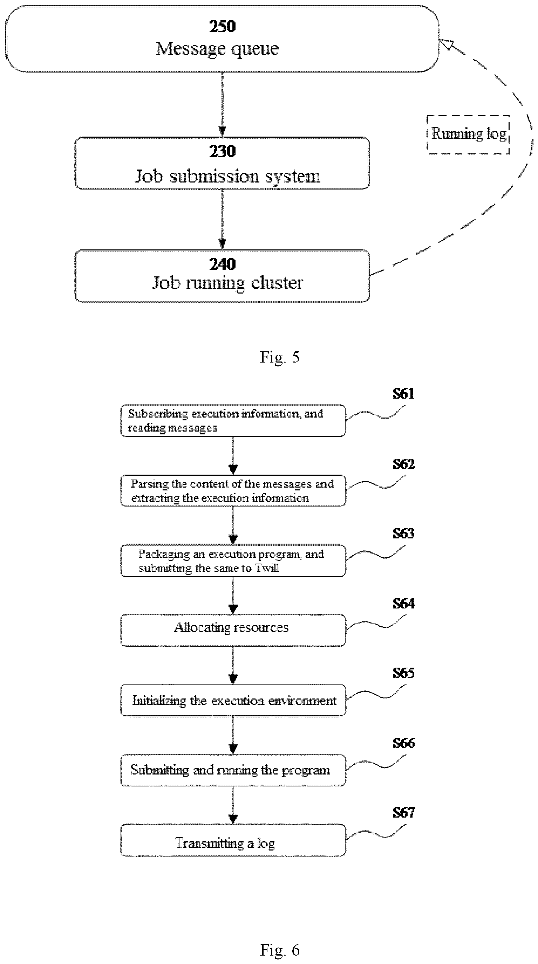

A detailed running process and data flow of a work steam submission stage are described below with reference to Fig. 5. As described above, the job stream submission system acquires adapted DAG execution information. According to some embodiments, after adapting the node information to the Flink operators, the DAG processing module publishes job stream execution information to the message queue 250. Then, the job submission module 230 receives the execution information from the message queue by subscribing a related topic from the message queue. In other implementations, the processed DAG execution information may also be received directly from the DAG processing module 230 instead of through the message queue.

The job submission module 230 parses the received execution information, and determines an execution entry of a stream computing program.

Subsequently, the job submission module 230 packages a main program and a DAG node program. The job submission module 230 may include a module for unified management of resources. Specifically, in the case where the job running cluster 240 is yarn, the resource management module may be a project Apache Twill developed for simplifying application development on Yarn, which is referred to as twill below. The job submission module can submit the entire job program package to the twill module, and twill performs unified resource allocation and program management on the program package, and subsequently submits the program package to the job running cluster. For example, after receiving the packaged program, the execution module of twill decompresses the program package, configures the environment in which the program runs by using configuration information, and then submits the service job to the cluster 240 by Flink run.

According to different embodiments, the job running cluster may be local or remote relative to the job submission module. Different submission methods will be used for different locations of the job running cluster, and this will be described in detail below with reference to Fig. 5.

Specifically, after parsing the DAG, the DAG processing module publishes the job execution graph to the message queue. The job submission module subscribes messages of a related topic, and packages the job program by parsing and extracting effective execution information in the messages. As each job stream logic has a different requirement, a different running instance, and a different resource size that needs to be allocated, taking into account the heterogeneity of job stream execution, the program package is managed and runs in a unified manner, jobs of the job stream are submitted to the cluster, and program running is started, wherein various metrics of the program running are computed by the metric collection system via the message queue, and then persisted in the storage system. The meta-information of the job stream data in the program and the log information of the program running are also persisted in the storage system for use by a downstream monitoring data service system.

In the related art, generally with the DAG nodes being managed separately and having independent interfaces respectively, description information of each node type is combined with a corresponding node execution logic, and respectively encapsulated according to the DAG node type. Such an independent management mode facilitates the division of programming work, but this structure results in that at submission to the running cluster, each DAG node needs independent submission due to the inconsistency of the DAG, thus causing a lot of overhead and slow preload time in a remote submission scenario. In addition, for Java-developed applications, the program class loading mechanism relies on a parents delegation model of a JVM. In scenarios with a complex job stream logic, improper class loading operations will cause a problem of jar package conflict and the like.

To solve this problem, the computation process involves the participation of a limited number of DAG nodes for a DAG interactive stream computing scenario, in order to accelerate the initialization of the program, and improve the computation efficiency.

Specifically, according to an embodiment of the present disclosure, the node execution logic of different types of nodes required by the Flink engine is encapsulated in a unified code framework by a unified class dependency. Therefore, in the formation of the program package, the job stream description information of different types of nodes can be encapsulated with the arithmetic logic of different types of nodes, instead of independently encapsulated according to nodes. Through this design, the DAG execution package or program package can be submitted to the cluster as a complete jar package, so that the number of package copies and network overhead when tasks are submitted remotely can be reduced, the process of program initialization is accelerated, and in the case of a transfer failure due to a network error, transfer of the complete packet can be resumed from a breakpoint, thereby increasing the fault tolerance ability of the architecture.

Based on whether a Flink computing cluster and a submission system are in the same cluster, and specifically, based on whether the job running cluster 240 is local relative to the job submission module 230, after the program is received, the program can be submitted to the running cluster by a remote or local submission method.

Next, specific steps of the remote submission method according to an embodiment are described with reference to Fig. 6. In the case where a Flink computing cluster and a submission module are not in the same cluster, the remote submission method can be used.

In step S61, the job submission module receives messages related to execution information from the message queue by subscribing a message-related topic from, for example, the message queue.

In step S62, the received messages are parsed, and the DAG execution information is extracted.

In step S63, the extracted DAG execution information is packaged. According to some embodiments, the packaged execution information is submitted to twill for unified management.

In step S64, a resource allocation step is carried out. According to some embodiments, the resource allocation step is performed by twill. According to some embodiments, twill selects an optimal execution machine in the network environment and an execution queue on yarn according to the complexity of the job stream logic.

In step S65, the program execution environment is initialized. According to some embodiments, the twill module copies the jar package, configuration information, and the like required for program running to the resource environment by ssh, thereby constructing a local execution environment for the program. According to some embodiments, different nodes in the DAG are encapsulated in a unified code framework, so the DAG execution information can be submitted as a complete JAR package.

In step S66, submission and running of the program are implemented. According to some embodiments, the twill module finally submits, by Flink run, the job stream program to the corresponding queue on yarn selected in step S64 for execution.

In step S67, a running log is transmitted and stored. According to some embodiments, after the program is executed, the log information of the program running is transmitted to the message queue in a port forwarding manner, and finally persisted in the storage system through the message queue.

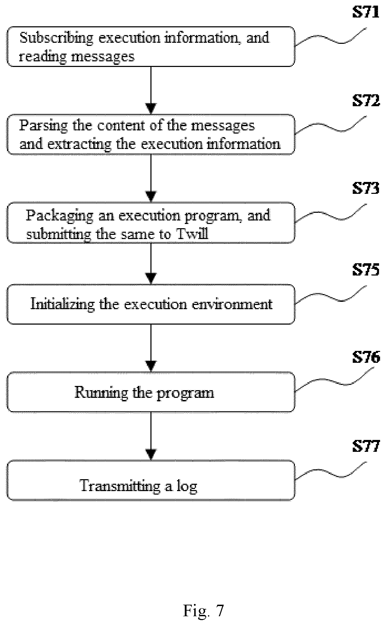

Next, specific steps of the local submission method according to an embodiment are described with reference to Fig. 7. In the case where a Flink computing cluster and a submission system are in the same cluster, the local submission method can be used.

In step S71, the job submission module receives messages related to execution information from the message queue by subscribing a message-related topic from, for example, the message queue.

In step S72, the received messages are parsed, and the DAG execution information is extracted.

In step S73, the extracted DAG execution information is packaged.

In step S75, the program execution environment is initialized. In an implementation, a configuration file, a jar package and the like required for program running are downloaded to a local temporary directory.

In step S66, submission and running of the program are implemented. According to some embodiments, the program is submitted to the running cluster by Flink run.

In step S67, a running log is transmitted and stored. According to some embodiments, in the program running process, the program running log is published to the message queue, and subsequently the log is printed to the console by kafka log append, and persisted in the storage system.

In conjunction with Figs. 6 and 7, two program submission and running mechanisms are described, especially the implementation of remote submission, which broadens the usage scenarios and reduces the running cost of the distributed program.

In addition, the introduction of twill enables unified abstraction and management of the program package, and is better than direct submission to yarn in a complex architecture. That is to say, the introduction of the twill module can manage the running resources and environment of the program in a unified manner on one hand, and can reduce the complexity of developing and running the distributed program on yarn on the other hand.

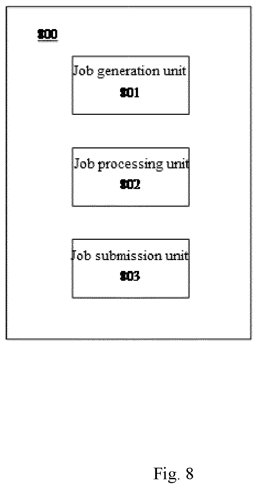

Fig. 8 is a block diagram showing an apparatus for stream computing based on DAG interaction according to an exemplary embodiment.

The apparatus 800 for stream computing based on DAG interaction according to the exemplary embodiment may include: a job generation unit 801, a job processing unit 802, and a job submission unit 803. The job generation unit 801 is configured to generate first DAG job stream description information according to a first DAG node graph composed of DAG nodes belonging to a first type set; the job processing unit 802 is configured to convert the first DAG job stream description information into second DAG job stream description information by adapting the DAG nodes belonging to the first type set into DAG nodes belonging to a second type set suitable for a Flink engine; and the job submission unit is configured to encapsulate the second DAG job stream description information into a DAG execution package and send the DAG execution package to a job running cluster, wherein the DAG execution package includes the second DAG job stream description information and an arithmetic logic of nodes in the second DAG job stream description information. In this way, efficient stream computing can be achieved.

In some embodiments, the job running cluster is remotely positioned relative to the job submission unit to achieve a remote submission scenario. In some embodiments, to reduce the burden of the job running cluster, the job submission unit further includes a twill module, and wherein the step of encapsulating the second DAG job stream description information into a DAG execution package and/or the step of sending the DAG execution package to a job running cluster is implemented by the twill module. In some embodiments, to achieve the diversity of the system architecture, the job generation unit, the job processing unit, and the job submission unit are decoupled from each other through a message queue.

It should be understood that the above description of the method steps in conjunction with Figs. 1-7 is also applicable to the units that execute the corresponding method steps in Fig. 8, and will not be repeated here.

According to one aspect of the present disclosure, an electronic device is also provided, which may include: a processor; and a memory storing a program, the program including instructions that, when executed by the processor, cause the processor to execute the above method for stream computing based on DAG interaction.

According to another aspect of the present disclosure, a computer-readable storage medium storing a program is also provided, the program including instructions that, when executed by a processor of an electronic device, cause the electronic device to execute the above method for stream computing based on DAG interaction.

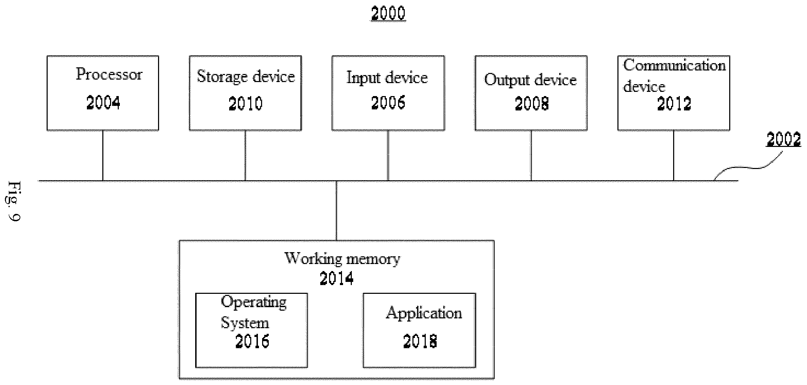

Referring to Fig. 9, a computing device 2000 will now be described, which is an example of the electronic device that can be applied to various aspects of the present disclosure. The computing device 2000 may be any machine configured to perform processing and/or computations, and can be, but is not limited to, a workstation, a server, a desktop computer, a laptop computer, a tablet computer, a personal digital assistant, a robot, a smart phone, a vehicle-mounted computer, or any combination thereof. The above computing method may be implemented in whole or at least in part by the computing device 2000 or a similar device or system.

The computing device 2000 may include elements connected with a bus 2002 or communicate with the bus 2002 (possibly via one or more interfaces). For example, the computing device 2000 may include the bus 2002, one or more processors 2004, one or more input devices 2006, and one or more output devices 2008. The one or more processors 2004 may be any type of processors, and may include, but are not limited to, one or more general-purpose processors and/or one or more special-purpose processors (for example, special processing chips). The input device 2006 may be any type of device that can input information to the computing device 2000, and may include, but is not limited to, a mouse, a keyboard, a touch screen, a microphone, and/or a remote control. The output device 2008 may be any type of device that can present information, and may include, but is not limited to, a display, a speaker, a video/audio output terminal, a vibrator, and/or a printer. The computing device 2000 may also include a non-transitory storage device 2010 or be connected with a non-transitory storage device 2010. The non-transitory storage device may be any storage device that is non-transitory and can achieve data storage, and may include, but is not limited to, a disk drive, an optical storage device, a solid-state memory, a floppy disk, a flexible disk, a hard disk, a magnetic tape or any other magnetic medium, an optical disk or any other optical medium, an ROM (read only memory), an RAM (random access memory), a cache memory and/or any other memory chip or cartridge, and/or any other medium from which a computer can read data, instructions, and/or codes. The non-transitory storage device 2010 can be detached from an interface. The non-transitory storage device 2010 may have data/programs (including instructions)/codes for implementing the above-mentioned method and steps. The computing device 2000 may also include a communication device 2012. The communication device 2012 may be any type of device or system that enables communication with an external device and/or with the network, and may include, but is not limited to, a modem, a network interface card, an infrared communication device, a wireless communication device, and/or a chipset, such as a Bluetooth^{™} device, a 1302.11 device, a WiFi device, a WiMax device, a cellular communication device and/or the like.

The computing device 2000 may also include a working memory 2014, which may be any type of working memory that can store programs (including instructions) and/or data useful for the work of the processor 2004, and may include, but is not limited to, a random access memory and/or a read only memory device.

Software elements (programs) may be located in the working memory 2014, and include, but are not limited to, an operating system 2016, one or more applications 2018, a driver, and/or other data and codes. Instructions for executing the above methods and steps may be included in the one or more applications 2018, and the above computing method may be implemented by reading and executing the instructions of the one or more applications 2018 by the processor 2004. More specifically, in the above computing method, steps S101 to S103 may be implemented, for example, by the processor 2004 executing the application 2018 having instructions of step S101 to step S103. In addition, other steps in the above computing method may be implemented, for example, by the processor 2004 executing the application 2018 that has instructions for executing the corresponding steps. Executable codes or source codes of instructions of the software elements (programs) may be stored in a non-transitory computer-readable storage medium (such as the above-mentioned storage device 2010), and may be stored in the working memory 2014 during execution (may be compiled and/or installed). The executable codes or source codes of the instructions of the software elements (programs) may also be downloaded from a remote location.

It should also be understood that various modifications can be made according to specific requirements. For example, specific elements may also be implemented by customized hardware, and/or hardware, software, firmware, middleware, microcode, hardware description language, or any combination thereof. For example, some or all of the disclosed methods and devices may be implemented by programming hardware (for example, including a programmable logic circuit of a field programmable gate array (FPGA) and/or programmable logic array (PLA)) in an assembly language or hardware programming language (such as VERILOG, VHDL, or C++) by using the logic and algorithm according to the present disclosure.

It should also be understood that the above method may be implemented in a server-client mode. For example, a client can receive data input by the user and send the data to a server. The client can also receive data input by the user, perform a part of processing in the above method, and send the processed data to the server. The server can receive the data from the client, execute the above method or another part of the above method, and return an execution result to the client. The client can receive the execution result of the method from the server, and can present the same to the user through an output device, for example.

It should also be understood that the components of the computing device 2000 may be distributed in a network. For example, one processor may be used to perform some processing, and at the same time another processor remote from the one processor may perform other processing. Other components of the computing system 2000 may also be similarly distributed. In this way, the computing device 2000 may be interpreted as a distributed computing system that performs processing in multiple locations. For example, the computing device 2000 may be implemented as part of a cloud platform. The cloud platform abstracts underlying functions of hardware (for example, servers) and software resources of the cloud. The resources may include applications and/or data that can be used when computer processing is performed on a server remote from the computing device 2000. The resources may also include services provided through the Internet and/or through a subscriber network such as a cellular or Wi-Fi network.

According to the technical solutions of the embodiments of the present disclosure, the efficiency of stream computing can be improved, and user experience can be improved.

Although the embodiments or examples of the present disclosure have been described with reference to the accompanying drawings, it should be understood that the above methods, systems, and devices are merely exemplary embodiments or examples, and the scope of the present invention is not limited by these embodiments or examples, but is only defined by the claims as granted and their equivalent scope. Various elements in the embodiments or examples may be omitted or replaced by equivalent elements. In addition, the steps may be executed in an order different from that described in the present disclosure. Further, various elements in the embodiments or examples may be combined in various ways. Importantly, as technology evolves, many elements described herein may be replaced by equivalent elements that emerge after the present disclosure.

## Claims

1. A computer-implemented stream computing method based on directed acyclic graph, DAG, interaction, comprising:
generating (S11) first DAG job stream description information according to a first DAG node graph composed of DAG nodes belonging to a first type set;
converting (S12) the first DAG job stream description information into second DAG job stream description information by adapting the DAG nodes belonging to the first type set into DAG nodes belonging to a second type set suitable for a Flink engine;
encapsulating (S13) the second DAG job stream description information into a DAG execution package, the DAG execution package comprising the second DAG job stream description information and an arithmetic logic of nodes in the second DAG job stream description information; and
sending (S14) the DAG execution package to a job running cluster.

2. The method according to claim 1, wherein the DAG nodes belonging to the first type set at least comprise a data source node, a data transformation node, a data join node, a data aggregation node, and a sink node, and
adapting the DAG nodes belonging to the first type set into the DAG nodes belonging to the second type set suitable for the Flink engine comprises adapting nodes of different types in the DAG nodes belonging to the first type set into a corresponding Flink operator with a same data structure, respectively.

3. The method according to claim 2, wherein adapting the data source node in the DAG nodes belonging to the first type set into a corresponding Flink operator comprises:
loading configuration information and description information of the data source node;
initializing a data source node object; and
assigning a Flink stream object.

4. The method according to claim 2 or 3, wherein adapting the data transformation node in the DAG nodes belonging to the first type set into a corresponding Flink operator comprises:
loading configuration information and description information of the data transformation node;
initializing a data transformation node object;
encapsulating a data transformation logic in the data transformation node object into a corresponding Flink operator;
performing data transformation on the corresponding Flink operator according to a code logic of the data transformation node; and
transferring the Flink operator subjected to data transformation to a downstream node.

5. The method according to any of claims 2-4, wherein adapting the data join node in the DAG nodes belonging to the first type set into a corresponding Flink operator comprises:
loading configuration information and description information of the data join node;
initializing a data join node object;
finding a join key for a join operation on a data stream related to the data join node; and
merging data in the data stream according to the join key.

6. The method according to any of claims 2-5, wherein adapting the data aggregation node in the DAG nodes belonging to the first type set into a corresponding Flink operator comprises:
loading configuration information and description information of the data aggregation node;
initializing a data aggregation node object;
finding an aggregation key for an aggregation operation on a data stream related to the data aggregation node; and
aggregating data in the data stream according to the aggregation key.

7. The method according to any of claims 2-6, wherein adapting the sink node in the DAG nodes belonging to the first type set into a corresponding Flink operator comprises:
loading configuration information and description information of the sink node;
initializing a sink node object; and
encapsulating the sink node object into a runnable object and putting the runnable object into a thread pool;
after the DAG nodes are traversed, triggering the sink node object in the thread pool; and
writing data into the sink node object.

8. The method according to any of the previous claims, wherein the first DAG job stream description information and the second DAG job stream description information are in a json format; or
wherein the first DAG job stream description information and the second DAG job stream description information adopt the same data encapsulation.

9. The method according to any of the previous claims, further comprising at least one of the following steps:
receiving metric information of DAG job stream running from the job running cluster, performing metric computations through counter and gauge, and storing computed metric information;
receiving and storing flow data meta-information of DAG job stream running from the job running cluster; and
generating only one DAG execution package for all different node types in the second DAG job stream description information.

10. The method according to any of the previous claims, wherein the first DAG node graph is formed by dragging, by a user, the DAG nodes belonging to the first type set.

11. A stream computing apparatus based on directed acyclic graph, DAG, interaction, comprising:
a job generation unit (801), configured to generate first DAG job stream description information according to a first DAG node graph composed of DAG nodes belonging to a first type set;
a job processing unit (802), configured to convert the first DAG job stream description information into second DAG job stream description information by adapting the DAG nodes belonging to the first type set into DAG nodes belonging to a second type set suitable for a Flink engine; and
a job submission unit (803), configured to encapsulate the second DAG job stream description information into a DAG execution package and send the DAG execution package to a job running cluster, wherein the DAG execution package comprises the second DAG job stream description information and an arithmetic logic of nodes in the second DAG job stream description information.

12. The apparatus according to claim 11, wherein the job running cluster is remotely positioned relative to the job submission unit; or
wherein the job generation unit, the job processing unit, and the job submission unit are decoupled from each other through a message queue.

13. The apparatus according to claim 11 or 12, wherein the job submission unit further comprises a twill module, and the twill module is configured to perform at least one of the following steps: encapsulating the second DAG job stream description information into the DAG execution package and sending the DAG execution package to the job running cluster is implemented by the twill module.

14. A non-transient computer-readable storage medium storing a program, the program comprising instructions that, when executed by a processor of an electronic device, cause the electronic device to execute the method according to any one of claims 1-10.

15. A computer program product comprising program code portions for performing the method of any one of claims 1-10 when the computer program product is executed on one or more computing devices.
